# EUROPÄISCHE PATENTSCHRIFT

(11) **EP 1 107 007 B1**
(45) Veröffentlichungstag und Bekanntmachung des Hinweises auf die Patenterteilung: **30.11.2005**
(21) Anmeldenummer: 00122210.8
(22) Anmeldetag: 16.10.2000
(51) Int. Cl.: G01P 3/481, G01P 3/488, B60T 8/00, B60T 8/32

(54) **Radbremsenanordnung für Fahrzeuge mit integrierter Steuerung und Verfahren zur Steuerung des Radbremsmomentes**
Vehicle wheel brake arrangement with integrated control device and method for controlling the wheel braking force
Dispositif de freinage pour roues d'un véhicule avec dispositif de contrôle intégré, et procédé pour contrôler la force de freinage

(30) Priorität: 30.11.1999 DE 19957632
(43) Veröffentlichungstag der Anmeldung: 13.06.2001
(73) Patentinhaber: Volkswagen Aktiengesellschaft, 38436 Wolfsburg (DE)
(72) Erfinder: Witte, Bastian, Dr., 38179 Gross Schwülper (DE); Babbel, Eckhard, Dipl.-Ing., 38100 Braunschweig (DE)

(56) Entgegenhaltungen:
- EP-A- 0 652 145
- DE-A- 3 526 189
- DE-A- 19 637 482
- DE-A- 19 716 291
- DE-U- 8 804 238
- DE-U- 8 804 239
- US-A- 5 067 778
- US-A- 5 255 962
- DECKER H ET AL: "ELEKTRONISCH GEREGELTE NUTZFAHRZEUGBREMSE ELECTRONICALLY CONTROLLED BRAKES FOR COMMERCIAL VEHICLES" ATZ AUTOMOBILTECHNISCHE ZEITSCHRIFT, FRANCKH'SCHE VERLAGSHANDLUNG. STUTTGART, DE, Bd. 96, Nr. 9, 1. September 1994 (1994-09-01), Seiten 506-508,510, XP000464674 ISSN: 0001-2785

## Beschreibung

Die Erfindung bezieht sich auf eine Radbremsenanordnung und ein Verfahren zur Steuerung des Radbremsmomentes bei einem Kraftfahrzeug.

Vorrichtungen der eingangs genannten Art finden in großer Breite Anwendung bei Antiblockier-Bremssystemen sowie darauf aufbauenden Steuerungsanordnungen zur Verbesserung der Spurtreue und der Kursstabilität von Kraftfahrzeugen in Situationen mit hohem Radschlupf beispielsweise im Rahmen eines Bremsvorganges oder bei Kurvenfahrten.

Aus DE 44 02 959 C2 ist eine Vorrichtung zur Erzeugung einer in ihrer Frequenz von der Raddrehzahl abhängigen Impulsfolge bekannt, die einen im Bereich eines Radlagers vorgesehenen Polring und einen diesem benachbart angeordneten Sensor aufweist. Anhand der zeitlichen Lage der durch den Sensor erzeugten Impulse kann über eine zentrale ABS-Regelungseinrichtung der momentane Drehzustand des Fahrzeugrades ermittelt und der Bremsdruck entsprechend gesteuert werden.

Da bei derartigen Bremssystemen häufig Bremsdrücke bzw. Bremsmomente eingestellt werden, die deutlich unter den durch den fahrerseitig bestimmten Niederdrückungsgrad des Bremspedals vorgegebenen Bremsmomenten liegen, sind die einzelnen Systemkomponenten in hohem Maße sicherheitsrelevant.

Aus der DE 88 04 238 U1 ist bekannt, einen Drehzahlsensor im Bereich einer Bremsscheibe so anzuordnen, dass die Signale über Zähne oder Stege innerhalb der Bremsscheibe verursacht werden. Weiterhin ist aus der DE 88 04 239 U1 bekannt, einen solchen Sensor an einer Bremszange anzuordnen. Die Sensorsignale werden einer zentralen Steuereinrichtung am Fahrzeug zugeleitet. Eine entsprechende Konfiguration wird auch in der US 5,067,778 A beschrieben.

Weiterhin ist aus der US 5,255,962 A und der EP 0 652 145 A1 bekannt, bei hydraulischen dezentrale Steuereinheiten in Radnähe anzuordnen.

Der Erfindung liegt die Aufgabe zugrunde, eine hinsichtlich ihrer Funktionszuverlässigkeit verbesserte Einstellung der Radbremsmomente zu ermöglichen.

Diese Aufgabe wird durch eine Radbremsenanordnung mit den Merkmalen von Patentanspruch 1 gelöst. Dadurch werden Übertragungsfehler von der Drehzahlerfassung und zu der Stellgliedbetätigung an der Bremszangenanordnung auf ein Minimum reduziert.

Weitere vorteilhafte Ausgestaltungen der Erfindung sind in den Patentansprüchen angegeben.

Durch Anordnung des Sensororgans an der Bremszangenanordnung wird es auf vorteilhafte Weise möglich, auf den bislang erforderlichen, im Hinblick auf mechanische Beschädigungen empfindlichen Polring zu verzichten und den momentanen Drehzustand des Rades beispielsweise am Außenumfang der Bremsscheibe mit hoher Auflösung unmittelbar über die Bremsscheibe selbst zu erfassen. Der unmittelbar mit der Bremsscheibe zusammenwirkende Sensor kann in die Bremszangenanordnung integriert werden, wodurch zum einen ein wirkungsvoller Schutz des Sensors selbst sowie auch ein Schutz der Verkabelung des Sensors gegeben ist. Durch die erfindungsgemäße Lösung wird es hierbei in vorteilhafter Weise möglich, eine modulartig abgeschlossene Bremszangenanordnung zu schaffen, die unter erheblich verringertem Verkabelungsaufwand montiert werden kann. In weiterhin vorteilhafter Weise kann durch die Integration des Sensors in die Bremsfaust der Umfang der freien Verkabelung insgesamt erheblich reduziert werden.

Zudem wird auf vorteilhafte Weise sichergestellt, daß die Idealposition des Sensors mit hoher Zuverlässigkeit eingehalten wird.

Alternativ hierzu oder auch in Kombination mit dieser Maßnahme ist es in vorteilhafter Weise auch möglich, das Sensororgan direkt an einem Bremsbelagelement anzubringen. Das Sensororgan kann hierbei ähnlich einem Kontakt zur Ermittlung des Belagverschleißes in den Reibbelag eingesetzt oder an einer Reibbelagträgerplatte neben dem daran befestigten Reibbelag angeordnet bzw. montiert sein. Hierdurch wird es möglich das Sensororgan auf einfache Weise mit dem Bremsbelag zu wechseln, so daß mit einer Erneuerung des Bremsbelages auch eine Erneuerung des Sensororgans erreicht wird. Über das Sensororgan kann dabei ggf. auch zugleich die Belagdicke bzw. das Unterschreiten einer Belagmindestdicke und/oder auch die Temperatur der Bremsscheibe erfaßt werden.

Eine besonders hohe Auflösung bei der Erfassung des Drehzustandes des entsprechenden Rades wird gemäß einer besonders bevorzugten Ausführungsform der Erfindung dadurch erreicht, daß das Sensororgan derart angeordnet ist, daß dieses mit dem Außenumfangsbereich der Bremsscheibe in Wechselwirkung tritt.

Insbesondere bei innenbelüfteten Scheibenbremsen wird es dabei möglich, das Sensororgan derart anzuordnen, daß dieses mit den radial verlaufenden Stegen in Wechselwirkung tritt.

Alternativ hierzu ist es auch möglich, die Bremsscheibe im Außenumfangsbereich mit Vorsprüngen oder Zähnen zu versehen, so daß das Sensororgan mit diesen Zähnen in Wechselwirkung tritt. Hierbei wird eine nochmals höhere Auflösung bei der Erfassung des momentanen Drehzustandes erreicht.

Insbesondere bei der vorangehend bereits angesprochenen Integration des Sensororganes in den Bremsbelag ist es möglich, das Sensororgan derart anzuordnen, daß dieses mit einem Seitenflächenbereich der Bremsscheibe in Wechselwirkung tritt.

Eine besonders markante Impulsfolge kann hierbei auf fertigungstechnisch vorteilhafte Weise erreicht werden indem die Bremsscheibe mit mehreren, auf einem Teilkreis liegenden Bohrungen versehen ist, wobei das Sensororgan derart angeordnet ist, daß dieses mit der Bremsscheibe im Bereich des Teilkreises in Wechselwirkung tritt. Anstelle dieser Bohrungen können auch in der Reibfläche ausgebildete radial verlaufende Nuten vorgesehen sein.

Die Wechselwirkung zwischen dem Sensororgan und der Bremsscheibe beruht in vorteilhafter Weise auf magnetischen Effekten. Hierdurch wird eine hohe Verschmutzungsunempfindlichkeit erreicht. Alternativ hierzu oder auch in Kombination mit dieser Maßnahme ist es auch möglich, Effekte elektrischer, insbesondere feldelektrischer, optischer oder akustischer Natur zur unmittelbaren Detektion der Drehung der Bremsscheibe durch den Bremsscheibenkörper selbst heranzuziehen.

Dadurch daß unmittelbar das Material der insgesamt äußerst robusten Bremsscheibe mit dem Sensororgan in Wechselwirkung tritt, ergibt sich eine besonders hohe Robustheit der Meßanordnung gegen äußere Einwirkungen. Die Bremsscheibe ist vorzugsweise aus einem ferromagnetischen Material gebildet oder zumindest im Bereich des Sensororganes entsprechend dotiert oder mit einer ferromagnetischen Beschichtung versehen.

Insbesondere bei der Nutzung magnetischer Effekte zur Erfassung des Drehzustandes des Rades ist das Sensororgan derart angeordnet, daß dieses eine Induktivitätsänderung eines die Bremsscheibe umfassenden Systems erfaßt. In vorteilhafter Weise weist hierbei das Sensororgan eine Spule auf, in welche infolge der wechselnden Intensität eines magnetischen Feldes Spannungsimpulse induziert werden. Die Spule ist hierzu in vorteilhafter Weise um einen Spulenkem herum angeordnet, wobei der Spulenkem derart an die Bremsscheibe herangeführt ist, daß die aus dem Spulenkern austretenden Feldlinien zeitweise in die Bremsscheibe eintreten. Anstelle der beschriebenen Spule ist es auch möglich, das Sensororgan als Hall-Effekt-Sensor auszubilden. Das hierzu erforderliche Magnetfeld kann über einen Dauermagneten oder über eine Spule erzeugt werden. Die Intensität des den Hall-Effekt-Sensor durchsetzenden Magnetfeldes wird wie auch bei den anderen Ausführungsformen durch die Geometrie des dem Sensororgan momentan benachbarten Abschnitts der Bremsscheibe (Steg, Bohrung, Nut) bestimmt. Die erfaßte Feldstärke wechselt dabei bei Drehung der Bremsscheibe entsprechend der Geometrie des an das Sensororgan herantretenden Abschnitts der Bremsscheibe.

In vorteilhafter Weise und in Kombination mit den vorangehend beschriebenen Maßnahmen wird die eingangs angegebene Aufgabe erfindungsgemäß durch eine Radbremsenanordnung für ein Fahrzeug mit einer Einrichtung zur Erfassung des Momentan-Drehzustandes eines Fahrzeugrades, einer Bremseinrichtung zur Erzeugung eines Radbremsmomentes und einer Steuereinrichtung zur Steuerung der Bremseinrichtung gelöst, wobei die Steuereinrichtung für jede Radbremsenanordnung eine dezentrale Steuerungseinheit aufweist, die im Bereich der Bremseinrichtung angeordnet ist und die anhand des erfaßten Momentan-Drehzustandes beurteilt, ob das Radbremsmoment beibehalten, erhöht, oder reduziert wird.

Hierdurch wird es ebenfalls möglich, den Verkabelungsaufwand sowie den Umfang des erforderlichen Austausches der Signale oder Daten zu verringern. Der Momentandrehzustand des Fahrzeugrades wird durch einen Impulsgeber erfaßt, der in seinem Aufbau und in seiner Anordnung dem vorangehend beschriebenen Sensororgan entspricht. Hierdurch wird es möglich, eine modulartig abgeschlossene ABS/ASR-Bremszange bzw. Bremsfaust zu schaffen, welche die abschließende Festlegung des Radbremsmomentes selbsttätig vornimmt. Hierdurch wird eine erhebliche Vereinfachung des Schnittstellen-Standards möglich.

Zusätzlich ist hierbei eine Zentralsteuereinrichtung vorgesehen, zur Vorgabe eines für das jeweilige Rad spezifischen Soll Momentandrehzustandes, insbesondere einer Rad-Solldrehzahl, Rad-Sollspannkraft und/oder Sollfrequenz. Anhand dieser wenigen leicht standardisierbaren Vorgabedaten kann seitens der radseitigen Steuerungseinrichtung das Bremsmoment selbsttätig festgelegt werden. Der Soll-Momentandrehzustand kann über ein Bus-System oder über eine einfache Impulsleitung der im Radbereich vorgesehenen dezentralen Steuerungseinheit zugeführt werden.

Gemäß der Erfindung ist die im Radbereich vorgesehene Steuerungseinheit in eine Bremszangenanordnung integriert. Ein entsprechender Gehäuseabschnitt kann unmittelbar in ein Radbremszylindergehäuse oder in einen Abschnitt einer Bremszange integriert sein. Die Detektion der Drehung der Bremsscheibe kann hierbei unmittelbar über ein beispielsweise im Bereich einer der Bremsscheibe zugewandten Stirnseite des entsprechenden Bremskolbens angeordnetes Sensororgan erfolgen.

Ein Abbau oder eine Erhöhung des Radbremsmomentes kann hierbei unmittelbar durch die in die Bremszange integrierte Steuerungseinheit veranlaßt werden, wenn die detektierte Pulsfrequenz von einem vorgegebenen Sollwert, insbesondere einer vorgegebenen Pulsfrequenz abweicht.

Die erfindungsgemäße Anordnung eignet sich in besonderem Maße für Bremssysteme mit elektromechanischer Bremsbackenbetätigung ohne jedoch hierauf beschränkt zu sein. Sie kann in besonders vorteilhafter Weise auch bei Bremssystemen mit hydraulischer Bremsbackenbetätigung Anwendung finden.

Auf Grundlage der beschriebenen Radbremsenanordnung wird es entsprechend der erfindungsgemäßen Lösung möglich, ein Kraftfahrzeug zu schaffen mit einer Steuerungsanordnung zur Steuerung der Radbremsmomente unter Berücksichtigung des Momentan-Drehzustandes der Räder wenigstens einer Fahrzeugachse, wobei die Steuerungsanordnung dezentrale, im Bereich der jeweiligen Radaufhängung vorgesehene Steuerungseinheiten aufweist, die in Abhängigkeit von dem erfaßten Momentan-Drehzustand des Rades sowie einem vorgegebenen Sollwert eine Änderung des jeweiligen Radbremsmomentes veranlassen.

Der Drehzustand eines Rades ist im vorliegenden Falle wenigstens durch die Winkelgeschwindigkeit und/der deren Ableitung d.h. der Winkelbeschleunigung bestimmt.

Die Steuerungsanordnung weist in vorteilhafter Weise eine zentrale Steuerungseinrichtung auf, die anhand eines Fahrzeug-Sollkurses sowie anhand der momentanen Radbremsmomente für jede dezentrale Steuerungseinheit einen Sollwert ermittelt. Dieser Sollwert kann gemäß einer weiteren besonders bevorzugten Ausführungsform der Erfindung auch unter Berücksichtigung der momentanen Radaufstandskräfte ermittelt werden. Letztere können hierzu über den Einfederungsgrad oder Roll-, Gier- und Nickbeschleunigungen ermittelt werden.

Hinsichtlich eines Verfahrens zur Steuerung des Radbremsmomentes bei einem Kraftfahrzeug wird die eingangs angegebene Aufgabe auch durch ein Verfahren gelöst, bei welchem im Rahmen eines Bremsvorganges, hinsichtlich des Ist-Drehzustandes der Räder wenigstens einer Fahrzeugachse, repräsentative Signale erzeugt werden, und das Radbremsmoment in Abhängigkeit von diesen Signalen gesteuert wird, mit den Schritten:
- Ermitteln eines Soll-Drehzustandes für jedes Rad der wenigstens einen Fahrzeugachse durch eine gemeinsame Steuerungseinrichtung,
- Übertragen von hinsichtlich des Soll-Drehzustandes repräsentativen Signalen zu einer, jeder Radbremseneinrichtung der wenigstens einen Fahrzeugachse zugeordneten und im Radbereich vorgesehenen Steuerungseinheit,
- Verarbeiten der hinsichtlich des Ist-Drehzustandes repräsentativen Signale und der hinsichtlich des Soll-Drehzustandes repräsentativen Signale durch die im Radbereich vorgesehene Steuerungseinheit, und
- Einstellen des jeweiligen Rad-Bremsmomentes in Abhängigkeit von der durch die radseitige Steuerungseinheit vorgenommenen Verarbeitung der Ist- und SollDrehzustände.

Hierdurch wird es möglich bei einem geringen Verkabelungsaufwand sicherzustellen, daß selbst bei Ausfall der zentralen Steuerungseinrichtung, insbesondere ESP-Steuerung, noch ein funktionsfähiges ABS-System zur Verfügung steht, da allein durch die radseitigen Steuerungseinheiten noch eine reine ABS-Regelung vorgenommen werden kann.

Der durch die zentrale Steuerungseinrichtung ermittelte Soll-Drehzustand wird gemäß einem bevorzugten Verfahrensablauf in Abhängigkeit von dem momentanen Bewegungszustand des Fahrzeugaufbaus bestimmt.

Eine besonders präzise Ermittlung dieses Soll-Drehzustandes wird weiterhin möglich, indem der Soll-Drehzustand in Abhängigkeit von den momentanen Radaufstandskräften bestimmt wird.

Vorzugsweise erfolgt die Ermittlung des Soll-Drehzustandes auf Grundlage eines den Fahrzeugkurs stabilisierenden Steuerungsalgorithmus insbesondere ASR-, EDS-, sowie ESP-Steuerungsstrategien. Die Rad-Solldrehzahl kann beispielsweise auf eine Radmitten-Sollgeschwindigkeit abgestimmt werden, die sich aus der Fahrgeschwindigkeit +/-½ Spurweite * Gierrate ermitteln läßt.

Gemäß einem besonders bevorzugten Ablauf des erfindungsgemäßen Verfahrens wird seitens der radseitigen Steuerungseinheit ein Soll/Ist Vergleich durchgeführt und das Radbremsmoment verringert, wenn die Ist-Winkelgeschwindigkeit des Rades kleiner ist als die Soll-Winkelgeschwindigkeit. Im Gegenzug hierzu wird das Radbremsmoment erhöht, wenn die Ist-Winkelgeschwindigkeit größer ist als die Soll-Winkelgeschwindigkeit.

Die hinsichtlich der Ist-Winkelgeschwindigkeit jedes Rades repräsentative Signale werden in vorteilhafter Weise der gemeinsamen Steuerungseinrichtung zugeführt, so daß die gemeinsame Steuerungseinrichtung auch diese für jedes Rad individuellen Informationen verarbeiten kann. In vorteilhafter Weise werden auch die durch die radseitigen Steuerungseinheiten individuell eingestellten Bremskräfte der zentralen Steuerungseinrichtung zugeführt.

Die Übertragung der hinsichtlich des Ist- und/oder des Soll-Drehzustandes repräsentativen Signale zwischen den vorzugsweise in die Bremseinrichtung integrierten dezentralen Steuerungseinheiten und der zentralen Steuerungseinrichtung erfolgt vorzugsweise über ein Bus-System.

Die hinsichtlich des Ist-Drehzustandes repräsentativen Signale werden vorzugsweise durch eine Sensoreinrichtung erzeugt, die unmittelbar mit einer Bremsscheibe in Wechselwirkung steht. Die Verarbeitung des jeweiligen Soll- und Ist-Drehzustandes erfolgt vorzugsweise innerhalb eines in die Radbremseneinrichtung integrierten Gehäuseabschnittes, in welchem die Steuerungseinheit aufgenommen ist. Weitere vorteilhafte Maßnahmen sind Gegenstand der Unteransprüche.

Weitere Einzelheiten ergeben sich aus der nachfolgenden Beschreibung mehrerer bevorzugter Ausführungsbeispiele in Verbindung mit der Zeichnung. Es zeigt:
- **Fig.** 1: eine perspektivische Ansicht einer Radbremsenanordnung mit einem in eine Bremsfaust eingesetzten, unmittelbar auf eine Außenumfangsfläche der Bremsscheibe gerichteten und hierbei unmittelbar mit der Bremsscheibe zusammenwirkenden Sensororgan;
- **Fig. 2**: eine perspektivische Ansicht einer weiteren Ausführungsform einer Radbremsenanordnung mit ebenfalls auf die Außenumfangsfläche gerichtetem und in eine die Bremsscheibe übergreifende Zange der Bremsfaust integriertem Sensor;
- **Fig. 3a**: eine perspektivische Skizze zur weiteren Erläuterung des Signalabgriffes am Außenumfangsbereich einer Bremsscheibe;
- **Fig. 3b**: eine vereinfachte Skizze zur Erläuterung des Signalabgriffes an den Stegen einer innenbelüfteten Bremsscheibe unter Verwendung eines Spulenelementes;
- **Fig. 3c**: eine weitere Skizze zur Erläuterung der Anordnung des Sensors innerhalb einer Bremszange;
- **Fig. 3d**: eine Skizze zur Erläuterung eines weiteren Aufbaues eines Sensororganes;
- **Fig. 4a**: eine Skizze zur Erläuterung eines vorteilhaften Signalabgriffs über im Bereich der Reibflächen einer Bremsscheibe ausgebildete Vertiefungen insbesondere Bohrungen;
- **Fig. 4b**: eine Skizze zur näheren Erläuterung der in Fig. 4a bereits angedeuteten Anordnung des Sensors;
- **Fig. 5**: eine vereinfachte Skizze zur Erläuterung des Signalabgriffes über integral mit einer Bremsscheibe in deren Außenumfangsbereich ausgebildete Zähne;
- **Fig. 6**: eine Prinzipskizze zur Erläuterung des Steuerungsaufbaues bei einem Kraftfahrzeug mit dezentraler Bremskraft-Endsteuerung;
- **Fig. 7**: eine Prinzipskizze zur Erläuterung der Aufgabenverteilung der einzelnen Steuerungsorgane sowie des zwischen diesen Steuerungsorganen vorgenommenen Datenaustauschs.

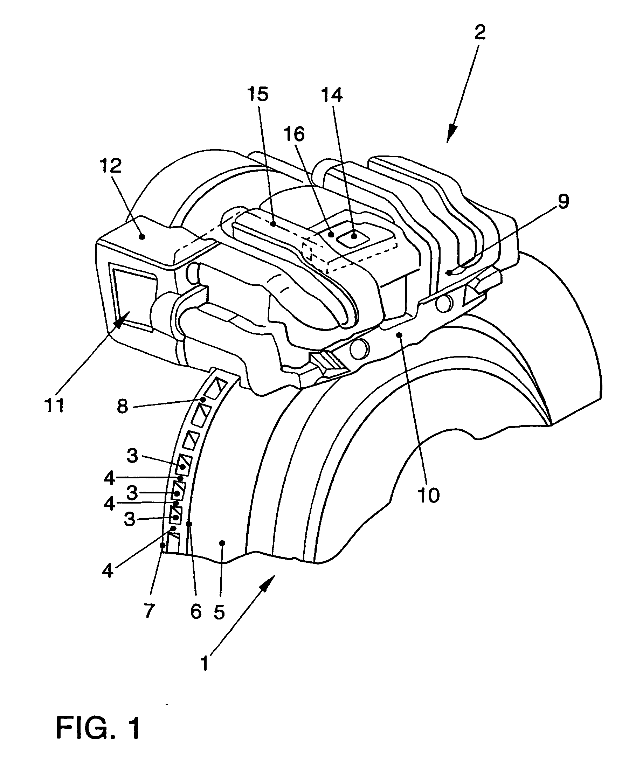

Die in Fig. 1 dargestellte Radbremseinrichtung umfaßt eine Bremsscheibe 1 sowie eine Bremszangenanordnung 2. Die Bremsscheibe 1 ist hier als innenbelüftete Bremsscheibe ausgebildet und weist hierzu Belüftungskanäle 3 auf die jeweils durch Stege 4 voneinander getrennt sind. Die Stege 4 sind integral mit der Bremsscheibe 1 ausgebildet und erstrecken sich in radialer Richtung bis auf das Radialniveau der die Reibfläche 5 begrenzenden Außenumfangskanten 6 und 7.

Zwischen den Außenumfangskanten 6, 7 der Bremsscheibe 1 erstreckt sich eine hier im wesentlichen zylindrisch ausgebildete Außenumfangsfläche 8. Für den Fall, daß die Bremsscheibe 1 eine geringe Permeabilität aufweist, kann diese im Bereich der Außenumfangsfläche 8 mit einer vorzugsweise korrosionsträgen, ferromagnetischen Dotierung versehen sein.

Die Reibfläche 5 ist von einem vorderen Greifbereich 9 der Bremszangenanordnung 2 übergriffen. Zwischen dem vorderen Greifbereich 9 und der Reibfläche 5 ist ein hier nur andeutungsweise erkennbares Bremsbelagelement 10, vorgesehen das auswechselbar in der Bremszangenanordnung 2 untergebracht ist.

Auf einer der Reibfläche 5 abgewandten Seite der Bremsscheibe 1 ist eine weitere Reibfläche (nicht sichtbar) vorgesehen, an welcher ebenfalls ein Bremsbelagelement anliegt. Die beiden Bremsbelagelemente können über einen Betätigungsmechanismus unter einer dosiert einstellbaren Anpreßkraft gegen die jeweiligen Reibflächen 5 gedrängt werden. Bei der dargestellten Ausführungsform umfaßt der Betätigungsmechanismus eine elektromechanische Antriebseinrichtung, die einen Elektromotor, eine Getriebeeinrichtung und einen Spindelmechanismus umfaßt. Alternativ hierzu ist es auch möglich, die Bremskraft über einen druckmittelbetätigten Bremskolben, der in einem Gehäuseabschnitt der Bremszangenanordnung untergebracht ist, zu erzeugen. Die Betätigungskraft wird über eine Radelektronik 11 gesteuert, die hier ebenfalls in einem, in die Bremszangenanordnung 2 integrierten Gehäuseabschnitt 12 in abgedichteter Weise eingesetzt ist.

Der Gehäuseabschnitt 12 ist derart angeordnet und ausgebildet, daß dieser auch im Falle einer Höchstbelastung der Bremse keiner unzulässig hohen Erwärmung unterliegt.

In die Bremszangenanordnung 2 ist ein Sensororgan 14 integriert, das unmittelbar in Zusammenwirkung mit der Bremsscheibe 1 Signale erzeugt, aus welchen der Momentan-Drehzustand des entsprechenden Rades ermittelt werden kann.

Das Sensororgan 14 ist bei dieser Ausführungsform derart angeordnet, daß dieses die Stege 4 der Bremsscheibe 1 detektiert. Hierzu ist das Sensororgan 14 in der Bremszangenanordnung 2 auf die Außenumfangsfläche ausgerichtet, angebracht. Die Befestigung des Sensororganes 14 erfolgt hierbei über einen Haltekörper 16, der in die Bremszangenanordnung 2 eingesetzt, insbesondere eingepreßt ist.

Das Sensororgan 14 ist über eine in die Bremszangenanordnung 2 integrierte, insbesondere eingegossene Verbindungsleitung 15 mit der genannten Radelektronik 11 verbunden. Die Verbindungsleitung 15 ist mit einer hitzebeständigen Isolierung versehen und in abdichtender Weise aus dem Sensor-Haltekörper 16 herausgeführt. Bei der dargestellten Ausführungsform erstreckt sich die Verbindungsleitung 15 vollständig abgeschirmt innerhalb einer Kanaleinrichtung, die in der Bremszangenanordnung 2 ausgebildet ist.

Bei der dargestellten Ausführungsform umfaßt das Sensororgan 14 eine Spule, die in Abhängigkeit einer durch die wechselnde Anwesenheit der Stege 4 veränderten Feldstärke impulsartige Signale erzeugt. Diese Signale werden über die genannte Verbindungsleitung 15 der Radelektronik 11 zugeführt und dort ausgewertet. Alternativ hierzu können die gewonnenen Signale auch einer zentralen Steuereinrichtung zugeführt werden.

Die Radelektronik 11 ist derart ausgebildet, daß diese unmittelbar eine Veränderung der Bremskraft veranlaßt, wenn der über das Sensororgan 14 ermittelte Drehzustand des Rades von einem vorgegebenen Soll-Drehzustand abweicht. Dieser Soll-Drehzustand ist beispielsweise derart gewählt, daß die Radumfangsgeschwindigkeit im wesentlichen der Relativgeschwindigkeit des Fahrzeuges gegenüber der Fahrbahn im Bereich des jeweiligen Radbodenkontaktzentrums ggf. auch unter Berücksichtigung eines errechneten Soll-Schlupfes (ESP), entspricht.

Anstelle einer auf einer Änderung eines magnetischen Feldes basierenden Erfassung des Drehzustandes der Bremsscheibe 1 ist es insbesondere bei diesem Bremsscheibenaufbau auch möglich, eine auf einer feldelektrischen, optischen oder akustischen Wechselwirkung basierende Erfassung der Drehung der Bremsscheibe vorzunehmen.

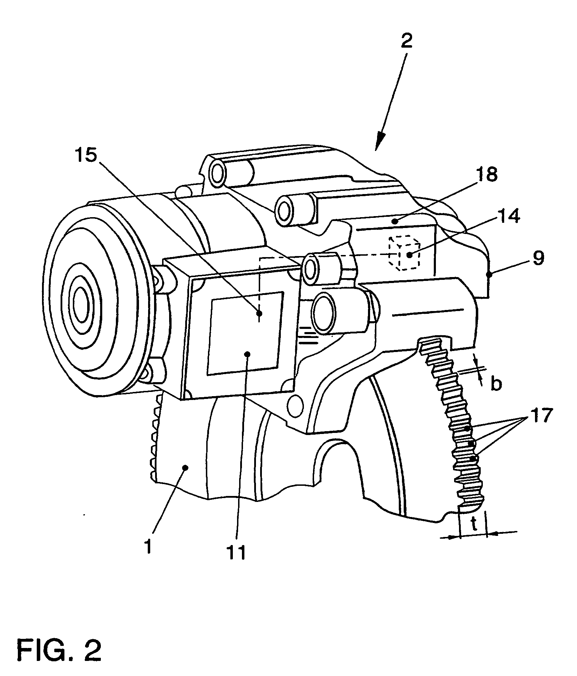

In Fig. 2 ist eine weitere Ausführungsform einer Radbremseinrichtung gezeigt, die sich von der vorangehend unter Bezugnahme auf Fig. 1 beschriebenen Ausführungsform insbesondere durch die Ausgestaltung der Bremsscheibe 1 sowie die Anordnung des Sensororganes 2 unterscheidet.

Die hier vorgesehene Bremsscheibe 1 ist im Außenumfangsbereich mit einer Vielzahl von Vorsprüngen versehen, die hier durch gleichmäßig beabstandete, integral mit der Bremsscheibe ausgebildete Zähne 17 gebildet sind. Die Teilung der Zähne ist hier derart gewählt, daß sie bezogen auf die Dicke t der Bremsscheibe 1 im Bereich von t/3 bis t liegt, wobei das größere Verhältnis bei dünnen Bremsscheiben 1 und das kleinere Verhältnis bei dickeren Bremsscheiben 1 zur Anwendung kommt. Die Zähne 17 sind mit Vorteil derart ausgebildet, daß deren in Umfangsrichtung gemessene Zahnbreite b größer ist als der ebenfalls in Umfangsrichtung gemessene Abstand benachbarter Zahnflanken.

Die Relativbewegung der Zähne gegenüber der Bremszangenanordnung 2 wird ebenfalls durch ein Sensororgan 14 erfaßt. Das Sensororgan 14 ist abweichend von der Ausführungsform gem. Fig. 1 in einem zum vorderen Greifbereich 9 hin führenden Armabschnitt 18 angeordnet.

Das Sensororgan 14 ist ebenfalls über eine vollständig von der Bremszangenanordnung umfaßte Verbindungsleitung 15 mit einer Radelektronik 11 gekoppelt.

Alternativ zu der Führung des Verbindungskabels 15 innerhalb der Bremszangenanordnung 2 bzw. innerhalb der Bremsfaust ist es auch möglich die Verbindungsleitung 15 im Außenbereich, vorzugsweise jedoch in einer entsprechend verlaufenden offenen Nut zu führen.

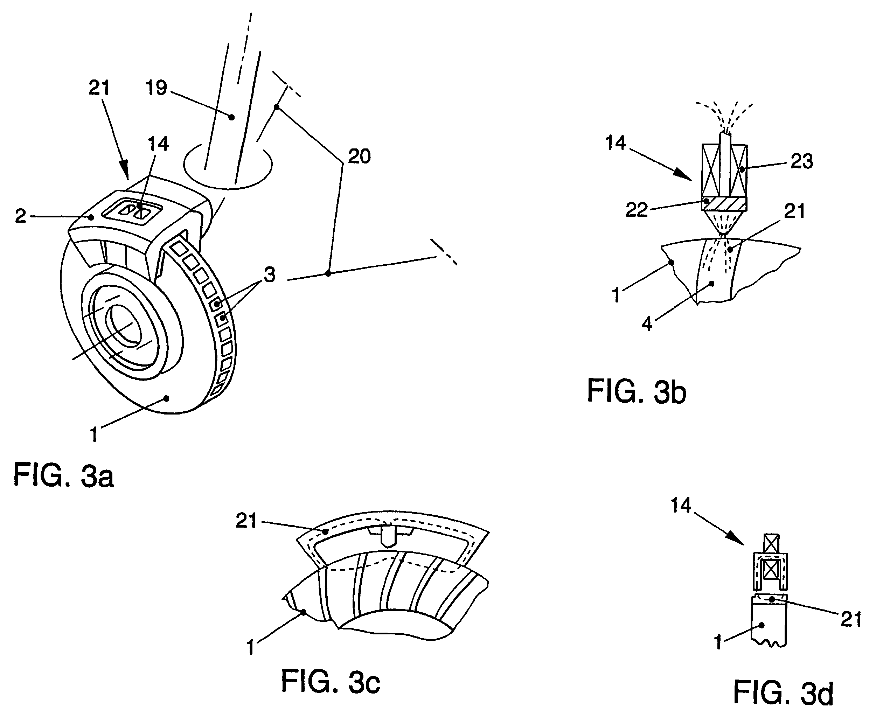

In Fig. 3 ist skizzenhaft eine Radaufhängung für ein Fahrzeugrad dargestellt, die hier ein Federbein 19 sowie untere Querlenker 20 aufweist. Die hier vorgesehene Bremsscheibe 1 weist ebenfalls Belüftungskanäle 3 auf, die durch Stege 4 voneinander getrennt sind.

Die hier vorgesehene Bremszangenanordnung 2 weist eine Ausnehmung 21 auf, in welcher das unmittelbar mit der Bremsscheibe 1 zusammenwirkende Sensororgan 14 aufgenommen, insbesondere verrastet ist.

In Fig. 3b ist ein Sensororgan 14 dargestellt, bei welchem die Anwesenheit eines Steges 4 der Bremsscheibe 1 über eine Änderung eines Magnetfeldes erfaßt wird. Der Verlauf der Feldlinien 21 ist hier andeutungsweise dargestellt. Das magnetische Feld kann über einen entweder als Dauermagnet ausgebildeten Magnetkörper 22 oder über eine weitere Spule, die ggf. gepulst betrieben wird, erzeugt werden. Gelangt bei der dargestellten Ausführungsform ein Steg 4 der Bremsscheibe 1 in den Austrittsbereich der Feldlinien des Sensororganes 14, so wird in eine Sensorwicklung 23 ein Spannungsimpuls induziert. Dieser kann über entsprechende Leitungsführung von einer Steuereinrichtung erfaßt und weiter verarbeitet werden.

Die Signalintensität kann noch weiter gesteigert werden, indem wie beispielhaft in Fig.3c angedeutet auch durch die Konstruktion der Bremszange bzw. Bremsfaust selbst der Eintritt der Feldlinien in die Bremsscheibe 1 noch weiter unterstützt wird.

In Fig.3d ist skizzenhaft eine weitere Ausführungsform des Sensororganes 14 dargestellt, das ebenfalls die Präsenz eines Geometriemerkmales der Bremsscheibe 1 über eine Änderung eines magnetischen Feldes erfaßt. Das Sensororgan ist hierbei jedoch derart ausgebildet, daß die Feldlinien 21 nur eine kurze Strecke in der Bremsscheibe 1 zurücklegen. Bei der gezeigten Ausführungsform, die sich sowohl zur Stegerfassung als auch zur Erfassung von integralen Zähnen eignet, verlaufen die Feldlinien 21 im wesentlichen parallel zur Rotationsachse der Bremsscheibe 1.

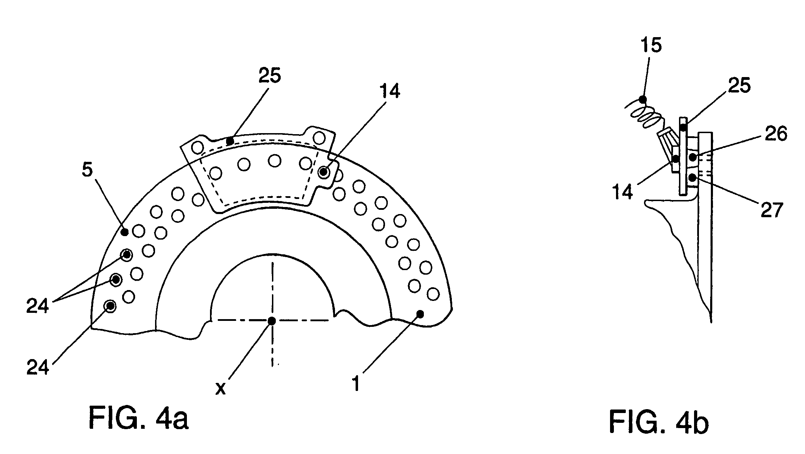

In Fig. 4a ist eine weitere Ausführungsform einer erfindungsgemäßen Radbremseinrichtung vereinfacht dargestellt. Die hier vorgesehene Bremsscheibe 1 weist mehrere Durchgangsbohrungen 24 auf, die unter gleichem Abstand zur Rotationsachse X der Bremsscheibe 1 sowie unter gleicher Teilung auf einem Teilkreis angeordnet sind. Die Erfassung der Drehung der Bremsscheibe 1 erfolgt über das unmittelbar mit der Bremsscheibe 1 zusammenwirkende Sensororgan 14, das sich auf Höhe des Teilkreises der Bohrungen 24 befindet. Das Sensororgan 14 ist derart ausgebildet, daß dieses beim Durchgang einer Bohrung 24 bzw. beim Wechsel von Bohrung 24 und Bremsscheibenmaterial ein impulsartiges Signal erzeugt.

Das Sensororgan 14 ist wie auch aus Fig. 4b hervorgeht hier unmittelbar an einer Basisplatte 25 eines Bremsbelages angebracht und dient zugleich als Belagdickensensor. Das Sensororgan 14 ist hierzu mit einem Koppelungsabschnitt 26 versehen, der gemeinsam mit einer Verschleißschicht 27 des Bremsbelages allmählich abgetragen wird.

Das Sensororgan 14 ist hier über eine flexible und hitzebeständige Verbindungsleitung 15 mit einem Steuerungssystem verbunden. Die hier gezeigte Sensoranordnung kann auch in Verbindung mit Bremsscheiben Anwendung finden, in welchen anstelle oder in Kombination mit den Durchgangsbohrungen 24 radial verlaufende Nuten in der entsprechenden Reibfläche 5 ausgebildet sind.

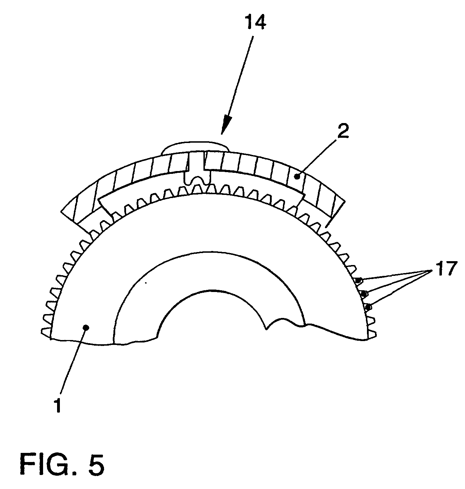

In Fig. 5 ist stark vereinfacht eine weitere Ausführungsform eines unmittelbar mit der Bremsscheibe 1 in Wechselwirkung tretenden Sensororgans 14 dargestellt. Die Bremsscheibe 1 ist hier ähnlich wie bei dem in Verbindung mit Fig. 2 beschriebenen Ausführungsbeispiel entlang ihres Außenumfanges mit Zähnen 17 versehen. Das Sensororgan 14 ist an den Außenumfang der Bremsscheibe 1 herangeführt und derart ausgebildet, daß es mit wenigstens zwei Zähnen 17 in Wechselwirkung tritt. Die hierbei über einen Zahn 17 in die Bremsscheibe 1 eintretenden Feldlinien gelangen über den benachbarten oder einen vorbestimmt beabstandeten weiteren Zahn 17 zurück zum Sensororgan 14.

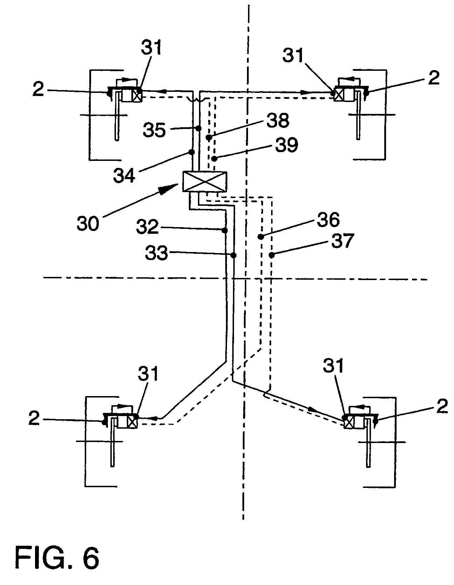

In Fig.6 ist schematisch eine Steuerungsanordnung zur Steuerung der Radbremsmomente dargestellt, die hier eine zentrale Steuereinrichtung 30 und dezentrale radseitige (End-) Steuerungseinheiten 31 (Radelektronik) aufweist.

Die Steuerungseinheiten stehen hier mit einem nicht näher dargestellten Leistungsschaltkreis in Verbindung, über welchen die Energiezufuhr zu der Antriebseinheit der elektromechanischen Bremse gesteuert wird. Anhand des Motorstromes kann die Bremskraft ermittelt und auf das momentane Bremsmoment geschlossen werden. Der Maximalwert des Motorstromes kann seitens der Radelektronik begrenzt werden.

Die dezentralen Steuerungseinheiten 31 einschließlich Leistungsschaltkreis sind hier entsprechend der in Verbindung mit Fig. 1 erläuterten Radelektronik 11 in einem unmittelbar an der jeweiligen Bremszangenanordnung 2 vorgesehenen Gehäuseabschnitt untergebracht.

Jede Steuerungseinheit 31 steuert das Radbremsmoment in Abhängigkeit von dem erfaßten Momentan-Drehzustand des Rades unter Berücksichtigung eines Sollwertes. Dieser Sollwert wird durch die zentrale Steuereinrichtung 30 für jedes Rad individuell festgelegt. Hierzu wird insbesondere der Bewegungszustand des Fahrzeugaufbaus bezogen auf die Raumachsen, den Lenkradeinschlag sowie die durch den Fahrer vorgegebene Beschleunigung oder Verzögerung berücksichtigt. Die so für jedes Rad individuell ermittelten Sollwerte werden vorzugsweise über ein bidirektionales Bussystem oder wie hier angedeutet über Signalleitungen 32, 33, 34, 35 der jeweiligen dezentralen Steuerungseinheit 31 zugeführt.

Die jeweils durch die bremsseitigen Steuerungseinheiten 31 eingestellten Radbremsmomente werden über das bidirektionale Bussystem bzw. Signalleitungen 36, 37, 38, 39 an die Steuerungseinrichtung 30 zurückgeführt. Die zentrale Steuerungseinrichtung 30 kann anhand dieser Radbremsmomente die maximal übertragbaren Radführungskräfte bzw. Radspannmomente ermitteln und diese Ergebnisse bei der weiteren Errechnung der Sollwerte berücksichtigen.

Durch die Auswertung der Raddrehzahlimpulse in der auch als dezentralen Radelektronik bezeichneten jeweiligen Steuerungseinheit 31 ergibt sich die Möglichkeit, die ausgewerteten Raddrehzahlen von jedem Rad über das Bussystem von der Radelektronik an die zentrale Steuerungseinrichtung 30 zu leiten. Hier wird aus den vier Raddrehzahlen die Fahrgeschwindigkeit bestimmt, wie dies in DE 19537791 näher erläutert ist. Es ist möglich, diese Fahrgeschwindigkeit über das Bussystem an alle vier dezentralen Steuerungseinheiten 31 weiterzuleiten. Es ist auch möglich, in der zentralen Steuerungseinrichtung 30 die Giergeschwindigkeit, die Spurweite und die Radmittengeschwindigkeit zu berücksichtigen und die entsprechend ermittelten Informationen zum jeweiligen Rad-Sollzustand an die dezentralen (radseitigen) Steuerungseinheiten 31 zu leiten. Hierbei ergibt sich für jedes Rad eine hochgenaue Schlupfregelung. Im Bereich des jeweiligen Rades erfolgt hierbei eine individuelle ABS-Regelung, indem die Radelektronik aus der ermittelten Raddrehzahl und der Radsolldrehzahl den Radschlupf berechnet. Es ist möglich, in die zentrale Steuereinrichtung 30 eine ESP-Regeleinrichtung aufzunehmen, über welche die Radsolldrehzahl oder ein Rad-Sollschlupf für jedes Rad individuell berechnet wird und über das Bussystem oder eine entsprechende Datenleitung der jeweiligen Radelektronik zur weiteren Bremskraftregelung zugeführt wird.

Durch das erfindungsgemäße System wird es möglich selbst im Falle einer Leitungsunterbrechung weiterhin eine ausreichende Bremskraftregelung bereitzustellen, da eine reine ABS-Regelung auch ohne Vorgabe von Sollwerten seitens der zentralen Steuereinrichtung lediglich durch die für jedes Rad individuell vorgesehene Radelektronik bzw. radseitige Steuerungseinheit 31 möglich ist.

Insgesamt wird es möglich, mit einem geringen Verkabelungsaufwand eine Steuerungsanordnung zu schaffen, die sich durch eine präzise individuelle Steuerung der Radbremsmomente auszeichnet und im Hinblick auf die hierbei erreichte hohe Steuerungsdynamik zu einer noch weiter verbesserten Kursstabilität in Extremsituationen beiträgt.

Anstelle der hier zum einfacheren Verständnis beschriebenen Signalleitungen 32 bis 39 wird gemäß einem besonderen Aspekt der Erfindung vorzugsweise ein bidirektionales Bussystem verwendet, über welches die gemeinsame zentrale Steuerungseinrichtung ("Zentralsteuergerät") und die radseitigen Steuerungseinheiten ("Radelektronik") miteinander gekoppelt sind.

Eine besonders hohe Funktionszuverlässigkeit kann hierbei auf vorteilhafte Weise dadurch erreicht werden, daß das Bussystem wenigstens zweifach redundant ausgebildet ist.

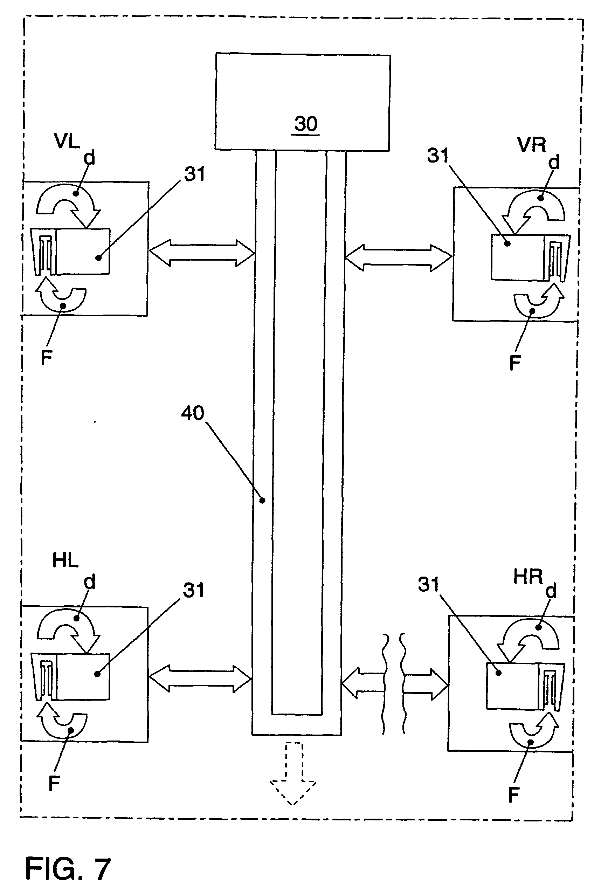

In Fig.7 ist eine bevorzugte Ausführungsform eines zur Durchführung des erfindungsgemäßen Bremskraft-Regelverfahrens vorgesehenen Steuerungssystems dargestellt. Dieses umfaßt hier die bereits beschriebene gemeinsame Steuerungseinrichtung 30 sowie die für jede Radbremsenanordnung individuell vorgesehenen Steuereinheiten 31. Die Koppelung der Steuerungseinrichtung 30 und der Steuerungseinheiten 31 erfolgt hier über ein bidirektionales Bussystem 40, das hier mehrfach redundant ausgebildet ist.

Die Steuerungseinrichtung 30 ist an einer gegen äußere Einflüsse abgeschirmten Stelle vorzugsweise im Bereich der Spritzwand des Fahrzeuges angebracht. Die Steuerungseinrichtung 30 verarbeitet hier Informationen über die momentane Bewegung des Fahrzeugaufbaus, insbesondere die Giergeschwindigkeit und deren zeitliche Ableitung. Vorzugsweise werden die Bewegungen des Fahrzeugaufbaus in und um die drei Raumachsen sowie die zeitlichen Ableitungen dieser Bewegungen berücksichtigt. Weiterhin können in vorteilhafter Weise auch der Lenkradeinschlagwinkel, die Radaufstandskräfte und deren zeitliche Ableitung berücksichtigt werden.

Die Eingangsinformationen werden beispielsweise unter ASR-, EDS- und/oder ESP-Regelkriterien verarbeitet. Auf Grundlage dieser Eingangsinformationen können für jede Radaufhängung hinsichtlich eines Soll-Drehzustandes indikative Daten erzeugt werden. Diese Daten beispielsweise zur Soll-Winkelgeschwindigkeit werden über das Bussystem 40 von der jeweiligen der Radbremsenanordnung zugeordneten Steuereinheit 31 gelesen.

Die zur Erreichung der vorgegebenen Solldrehzustände jeweils erforderliche Einstellung der Bremsmomente wird beispielsweise über die Anpreßkraft der Bremsbacken durch die radseitigen Steuerungseinheiten 31 im Rahmen eines geschlossenen Regelzyklus eingestellt. Hierzu werden die unmittelbar im Bereich der Radbremsenanordnung detektierten Informationen zum Drehzustand, beispielsweise Meßimpulse, aufgrund geometrischer Merkmale der jeweiligen Bremsscheibe durch die radseitige Steuerungseinheit verarbeitet. Die Informationen zum Raddrehzustand können über das Bussystem 40 auch der zentralen Steuerungseinrichtung 30 zugeführt werden, so daß diese hierauf basierend die die Fahrzeuggeschwindigkeit und die lokale Radbodenhaftung ermitteln und ggf. nochmals verfeinert die Radsolldrehzustände bestimmen kann.

Im Falle einer Störung des Datenaustausches (hier für das rechte Hinterrad HR angedeutet) zwischen der zentralen Steuerungseinrichtung 30 und den vorzugsweise in die Radbremsenanordnungen integrierten Steuerungseinheiten 31 ("Radelektronik") ist es möglich, eine lokale ABS Bremskraftregelung vorzunehmen. Hierzu werden die durch die Pfeilsymbole "d" angedeuteten Informationen zum Raddrehzustand beispielsweise in Form einer Impulsfolge mit winkelgeschwindigkeitsproportionaler Frequenz unmittelbar durch die radindividuelle Steuerungseinheit 31 verarbeitet. Auf Grundlage dieser Informationen kann dann, ggf. unter zumindest teilweisem Verzicht auf - oder vollständiger Ignorierung der seitens der Steuerungseinrichtung 30 vorgegebenen, möglicherweise unrichtigen Informationen zum Soll-Drehzustand eine Regelung der Bremskraft F erfolgen.

Die Informationen zum jeweiligen Radsoll-Drehzustand können auch über eine Schnittstelleneinrichtung beispielsweise an ein Bremssystem eines Fahrzeuganhängers weitergegeben werden. Hierdurch wird es möglich, auch für die Räder oder Achsen des Fahrzeuganhängers eine verbesserte, vorzugsweise individuelle Bremskraftregelung vorzunehmen.

Bei elektromechanischen Radbremsanordnungen kann eine hinsichtlich der momentanen Bremskraft indikative Signalrückführung zur radseitigen Steuerungseinheit 31 und/oder zur zentralen Steuerungseinrichtung 30 erfolgen. Derartige Signale können über den Leistungsbezug des jeweiligen Aktuators, insbesondere den Motorstrom, erzeugt werden. Es ist auch möglich, Meßglieder zur Messung der Betätigungskraft der Bremse vorzusehen.

Es ist auch möglich, die Bremsenanordnungen einer Achse über separate Bussysteme anzusteuern. Bei einem Fahrzeug mit zwei Achsen, beispielsweise einem PkW, ist es möglich, zwei separate Bussysteme diagonal vorzusehen, so daß die Bremsanordnungen VL/HR und VR/HL zumindest in einer Redundanzstufe jeweils über ein eigenes Bussystem mit der zentralen Steuerungseinrichtung operativ verbunden sind.

### BEZUGSZEICHENLISTE

- 1: Bremsscheibe
- 2: Bremszangenanordnung
- 3: Belüftungskanäle
- 4: Stege
- 5: Reibfläche
- 6: Außenumfangskante
- 7: Außenumfangskante
- 8: Außenumfangsfläche
- 9: Vorderer Greifbereich
- 10: Bremsbelagelement
- 11: Radelektronik
- 12: Gehäuseabschnitt
- 14: Sensororgan
- 15: Verbindungsleitung
- 16: Haltekörper
- 17: Zähne
- 18: Armabschnitt
- 19: Federbein
- 20: Querlenker
- 21: Feldlinien
- 22: Magnetkörper
- 23: Sensorwicklung
- 24: Durchgangsbohrungen
- X: Rotationsachse
- 25: Basisplatte
- 26: Koppelungsabschitt
- 30: Zentrale Steuereinrichtung
- 31: Dezentrale Steuerungseinheit
- 32, 33, 34, 35, 36,37, 38, 39: Signalleitungen
- 40: Bidirektionales Bussystem
- d: Hinsichtlich des Raddrehzustandes indikative Signale
- F: Bremskraft

## Patentansprüche

1. Radbremsenanordnung für ein Fahrzeug, umfassend:
- eine Bremszangenanordnung (2) zur Erzeugung eines Radbremsmomentes,
- ein Sensororgan (14) zur Erfassung des Momentan-Drehzustandes eines Fahrzeugrades, das mit einem Abschnitt der Bremsscheibe (1) in Wechselwirkung tritt, und
- eine Steuerungsanordnung zur Steuerung der Bremszangenanordnung (2), die anhand des erfaßten Ist- bzw. Momentan-Drehzustandes das Radbremsmoment steuert,
**dadurch gekennzeichnet, dass** die Steuerungsanordnung eine in die Bremszangenanordnung (2) integrierte radseitige Steuereinheit (31) aufweist, die in Abhängigkeit von dem erfaßten Ist-Drehzustand des Rades sowie einem vorgegebenen Soll-Drehzustand eine Einstellung des jeweiligen Radbremsmomentes veranlaßt.

2. Radbremsenanordnung nach Anspruch 1, **dadurch gekennzeichnet, dass** die Bremszangenanordnung (2) elektromechanisch betätigt wird.

3. Radbremsenanordnung nach Anspruch 1 oder 2, **dadurch gekennzeichnet, dass** Steuereinheit (31) mit dem Sensororgan (14) über eine in die Bremszangenanordnung (2) eingebettete Verbindungsleitung (15) gekoppelt ist.

4. Radbremsenanordnung nach einem der Ansprüche 1 bis 3, **dadurch gekennzeichnet, dass** das Sensororgan (14) einen Impulsgeber aufweist.

5. Radbremsenanordnung nach einem der Ansprüche 1 bis 4, **dadurch gekennzeichnet, dass** die Steuerungsanordnung eine zentrale Steuereinrichtung (30) zur Vorgabe eines Soll-Drehzustandes, insbesondere einer Rad-Solldrehzahl oder Rad-Sollspannkraft für jedes Rad, aufweist.

6. Radbremsenanordnung nach einem der Ansprüche 1 bis 5, **dadurch gekennzeichnet, dass** der Soll-Momentandrehzustand über ein Bus-System der dezentralen Steuerungseinheit (31) zugeführt wird.

7. Radbremsenanordnung nach einem der Ansprüche 1 bis 6, **dadurch gekennzeichnet, dass** zentrale Steuerungseinrichtung (30) anhand eines Fahrzeug-Sollkurses sowie anhand der momentanen Radbremsmomente für jede dezentrale Steuerungseinheit (31) einen Sollwert ermittelt.

8. Radbremsenanordnung nach einem der Ansprüche 1 bis 7, **dadurch gekennzeichnet, dass** die Wechselwirkung magnetischer, elektrischer, optischer oder akustischer Art ist.

9. Radbremsenanordnung nach einem der Ansprüche 1 bis 6 **dadurch gekennzeichnet, dass** das Sensororgan (14) die Änderung der Induktivität eines die Bremsscheibe umfassenden Systems erfaßt.

10. Radbremsenanordnung nach einem der Ansprüche 1 bis 9, **dadurch gekennzeichnet, dass** das Sensororgan (14) eine Spule (23) umfaßt.

11. Radbremsenanordnung nach Anspruch 10, **dadurch gekennzeichnet, dass** die Spule (23) um einen Spulenkern herum angeordnet ist, und dass der Spulenkern derart an die Bremsscheibe (1) herangeführt ist, dass die aus dem Spulenkem austretenden Feldlinien (21) in die Bremsscheibe (1) eintreten.

12. Radbremsenanordnung nach einem der Ansprüche 1 bis 11, **dadurch gekennzeichnet, dass** das Sensororgan (14) an einem auswechselbaren Bremsbelagelement (10) der Bremszangenanordnung angebracht ist.

13. Radbremsenanordnung nach einem der Ansprüche 1 bis 12, **dadurch gekennzeichnet, dass** das Sensororgan (14) derart angeordnet ist, dass dieses mit dem Außenumfangsbereich der Bremsscheibe (1) in Wechselwirkung tritt.

14. Radbremsenanordnung nach einem der Ansprüche 1 bis 12, **dadurch gekennzeichnet, dass** die Bremsscheibe (1) Innenbelüftungskanäle (3) aufweist, welche durch Stege (4) voneinander getrennt sind, wobei das Sensororgan (14) derart angeordnet ist, dass dieses mit den Stegen (4) in Wechselwirkung tritt.

15. Radbremsenanordnung nach einem der Ansprüche 1 bis 12, **dadurch gekennzeichnet, dass** die Bremsscheibe (1) im Außenumfangsbereich mit Vorsprüngen oder Zähnen (17) versehen ist, und dass das Sensororgan (14) mit den Vorsprüngen oder Zähnen (17) in Wechselwirkung tritt.

16. Radbremsenanordnung nach wenigstens einem der Ansprüche 1 bis 12, **dadurch gekennzeichnet, dass** das Sensororgan (14) derart angeordnet ist, dass dieses mit einem Seitenflächenbereich der Bremsscheibe (1) in Wechselwirkung tritt.

17. Radbremsenanordnung nach einem der Ansprüche 1 bis 12, **dadurch gekennzeichnet, dass** die Bremsscheibe (1) mit mehreren auf einem Teilkreis liegenden Bohrungen (24) versehen ist, und dass das Sensororgan (14) derart angeordnet ist, dass dieses mit der Bremsscheibe (1) im Bereich des Teilkreises in Wechselwirkung tritt.

18. Verfahren zur Steuerung des Radbremsmomentes bei einem Kraftfahrzeug mit einer Radbremsenanordnung nach einem der Ansprüche 1 bis 17,
- mit einem Sensororgan (14) zur Erfassung des Momentan-Drehzustandes eines Fahrzeugrades
- mit einer gemeinsamen, zentralen Steuerungseinrichtung (30), und
- mit je einer radseitigen, dezentralen Steuerungseinheit (31) je Fahrzeugrad, bei dem im Rahmen eines Bremsvorganges den Ist-Drehzustand der Räder wenigstens einer Fahrzeugachse repräsentierende Signale erzeugt werden und das Radbremsmoment in Abhängigkeit von diesen Signalen gesteuert wird, **gekennzeichnet durch die Schritte:**
- Ermitteln eines Ist-Drehzustandes für jedes Rad der wenigstens einen Fahrzeugachse **durch** jeweils ein Sensororgan (14), welches mit einem Abschnitt der Bremsscheibe (1) in Wechselwirkung tritt,
- Übertragen der den Ist-Drehzustand repräsentierenden Signale für jedes Rad zu der gemeinsamen Steuerungseinrichtung (30),
- Ermitteln eines Soll-Drehzustandes für jedes Rad der wenigstens einen Fahrzeugachse **durch** die gemeinsame Steuerungseinrichtung (30),
- Übertragen der den Soll-Drehzustand repräsentierenden Signale zu einer jeweiligen radseitigen, dezentralen, in die Bremszangenanordnung integrierten Steuerungseinheit (31),
- Verarbeiten der den Ist-Drehzustand repräsentierenden Signale und der den Soll-Drehzustand repräsentierenden Signale **durch** die dezentrale Steuerungseinheit (31), und
- Einstellen des jeweiligen Rad-Bremsmomentes in Abhängigkeit von der **durch** die dezentrale Steuerungseinheit (31) vorgenommenen Verarbeitung der Ist- und Soll-Drehzustandssignale.

19. Verfahren nach Anspruch 18, **dadurch gekennzeichnet, dass** der Soll-Drehzustand in Abhängigkeit von dem momentanen Bewegungszustand des Fahrzeugaufbaus bestimmt wird.

20. Verfahren nach Anspruch 18 oder 19, **dadurch gekennzeichnet, dass** der Soll-Drehzustand in Abhängigkeit von den momentanen Radaufstandskräften bestimmt wird.

21. Verfahren nach wenigstens einem der Ansprüche 18 bis 20, **dadurch gekennzeichnet, dass** der Soll-Drehzustand auf Grundlage eines den Fahrzeugkurs stabilisierenden Steuerungsalgorithmus ermittelt wird.

22. Verfahren nach wenigstens einem der Ansprüche 18 bis 21, **dadurch gekennzeichnet, dass** seitens der radseitigen Steuerungseinheit (31) ein Soll/Ist Vergleich durchgeführt wird und das Radbremsmoment verringert wird, wenn die Ist-Winkelgeschwindigkeit des Rades kleiner ist als die Soll-Winkelgeschwindigkeit, und dass das Radbremsmoment erhöht wird, wenn die Ist-Winkelgeschwindigkeit größer ist als die Soll-Winkelgeschwindigkeit.

23. Verfahren nach wenigstens einem der Ansprüche 18 bis 22, **dadurch gekennnzeichnet,** dass wenigstens die hinsichtlich des Ist- und/oder des Soll-Drehzustandes repräsentativen Signale über ein Bus-System der gemeinsamen Steuerungseinrichtung (30) zugeführt werden.

24. Verfahren nach wenigstens einem der Ansprüche 18 bis 23, **dadurch gekennzeichnet, dass** die Verarbeitung des jeweiligen Soll- und Ist-Drehzustandes innerhalb eines in die Radbremseneinrichtung integrierten Gehäuseabschnittes erfolgt in welchem die Steuerungseinheit (31) aufgenommen ist.

25. Verfahren nach wenigstens einem der Ansprüche 18 bis 24, **dadurch gekennzeichnet, dass** seitens der gemeinsamen Steuerungseinrichtung ein für jedes Rad individueller Soll-Drehzustand auf Grundlage einer ASR-, EDS- oder ESP-Regelstrategie ermittelt, und an die jeweilige radseitige Steuerungseinheit (31) weitergeleitet wird.

26. Verfahren nach wenigstens einem der Ansprüche 18 bis 25, **dadurch gekennzeichnet, dass** insbesondere im Falle einer Fehlfunktion bei der Vorgabe der Sollwerte durch die zentrale Steuerungseinrichtung (30) ein ABS-Steuerungsalgorithmus seitens der jeweiligen im Radbereich vorgesehenen Steuerungseinheit (31) (Radelektronik) abgearbeitet wird.

27. Verfahren nach wenigstens einem der Ansprüche 18 bis 26, **dadurch gekennzeichnet, dass** im Falle einer Fehlfunktion der radseitigen Steuerungseinheit eine ABS-Regelung des Bremsmomentes durch die gemeinsame Steuerungseinrichtung (30) vorgenommen wird.

28. Verfahren nach wenigstens einem der Ansprüche 18 bis 27, **dadurch gekennzeichnet, dass** die Fahrgeschwindigkeit des Fahrzeuges aus den vier radseitigen Sensororganen (14) errechnet wird.

29. Verfahren nach wenigstens einem der Ansprüche 18 bis 28, **dadurch gekennzeichnet, dass** für den Fall, dass seitens der zentralen Steuerungseinrichtung (30) keine den Soll-Drehzustand repräsentierende Signale vorliegen, eine ABS-Regelung durch die jeweilige radseitige Steuerungseinheit (31) erfolgt.

## Claims

1. Vehicle wheel brake arrangement, comprising:
- a brake calliper arrangement (2) for producing a wheel braking torque,
- a sensor element (14) for sensing the instantaneous rotational state of a vehicle wheel which interacts with a section of the brake disc (1), and
- a control arrangement for controlling the brake calliper arrangement (2) which controls the wheel braking torque by reference to the sensed actual and/or instantaneous rotational state,
**characterized in that** the control arrangement has a wheel-mounted control unit (31) which is integrated into the brake calliper arrangement (2) and causes the respective wheel braking torque to be set as a function of the sensed actual rotational state of the wheel and a predefined setpoint rotational state.

2. Wheel brake arrangement according to Claim 1, **characterized in that** the brake calliper arrangement (2) is activated electronically.

3. Wheel brake arrangement according to Claim 1 or 2, **characterized in that** the control unit (31) is coupled to the sensor element (14) via a connecting line (15) which is embedded in the brake calliper arrangement (2).

4. Wheel brake arrangement according to one of Claims 1 to 3, **characterized in that** the sensor element (14) has a pulse transmitter.

5. Wheel brake arrangement according to one of Claims 1 to 4, **characterized in that** the control arrangement has a central control device (30) for predefining a setpoint rotational state, in particular a wheel setpoint rotational speed or wheel setpoint clamping force for each wheel.

6. Wheel brake arrangement according to one of Claims 1 to 5, **characterized in that** the setpoint instantaneous rotational state is fed to the decentralized control unit (31) via a bus system.

7. Wheel brake arrangement according to one of Claims 1 to 6, **characterized in that** the central control device (30) determines a setpoint value by reference to a vehicle setpoint course and by reference to the instantaneous wheel braking torques for each decentralized control unit (31).

8. Wheel brake arrangement according to one of Claims 1 to 7, **characterized in that** the interaction is of magnetic, electrical, optical or acoustic type.

9. Wheel brake arrangement according to one of Claims 1 to 6, **characterized in that** the sensor element (14) senses the change in the inductance of a system which comprises the brake disc.

10. Wheel brake arrangement according to one of Claims 1 to 9, **characterized in that** the sensor element (14) comprises a coil (23).

11. Wheel brake arrangement according to Claim 10, **characterized in that** the coil (23) is arranged around a coil core, and **in that** the coil core is moved towards the brake disc (1) in such a way that the field lines (21) leaving the coil core enter the brake disc (1).

12. Wheel brake arrangement according to one of Claims 1 to 11, **characterized in that** the sensor element (14) is mounted on an exchangeable brake lining element (10) of the brake calliper arrangement.

13. Wheel brake arrangement according to one of Claims 1 to 12, **characterized in that** the sensor element (14) is arranged in such a way that it interacts with the external circumferential region of the brake disc (1).

14. Wheel brake arrangement according to one of Claims 1 to 12, **characterized in that** the brake disc (1) has internal venting ducts (3) which are separated from one another by webs (4), wherein the sensor element (14) is arranged in such a way that it interacts with the webs (4).

15. Wheel brake arrangement according to one of Claims 1 to 12, **characterized in that** the brake disc (1) is provided with projections or teeth (17) in the external circumferential region, and **in that** the sensor element (14) interacts with the projections or teeth (17).

16. Wheel brake arrangement according to at least one of Claims 1 to 12, **characterized in that** the sensor element (14) is arranged in such a way that it interacts with a side face region of the brake disc (1).

17. Wheel brake arrangement according to one of Claims 1 to 12, **characterized in that** the brake disc (1) is provided with a plurality of bores (24) located on a pitch circle, and **in that** the sensor element (14) is arranged in such a way that it interacts with the brake disc (1) in the region of the pitch circle.

18. Method for controlling the wheel braking torque in a motor vehicle having a wheel brake arrangement according to one of Claims 1 to 17,
- having a sensor element (14) for sensing the instantaneous rotational state of a vehicle wheel,
- having a common, central control device (30), and
- having in each case one wheel-mounted, decentralized control unit (31) per vehicle wheel,
in which signals which represent the actual rotational state of the wheels of at least one vehicle axle within the scope of a braking process are produced and the wheel braking torque is controlled as a function of these signals, **characterized by** the steps:
- an actual rotational state is determined for each wheel of the at least one vehicle axle by means of in each case one sensor element (14) which interacts with a section of the brake disc (1),
- the signals representing the actual rotational state for each wheel are transmitted to the common control device (30),
- a setpoint rotational state is determined for each wheel of the at least one vehicle axle by means of the common control device (30),
- the signals representing the setpoint rotational state are transmitted to a respective wheel-mounted, decentralized control unit (31) which is integrated into the brake calliper arrangement,
- the signals representing the actual rotational state and the signals representing the setpoint rotational state are processed by the decentralized control unit (31), and
- the respective wheel braking torque is set as a function of the processing of the actual and the setpoint rotational state signals which is performed by the decentralized control unit (31).

19. Method according to Claim 18, **characterized in that** the setpoint rotational state is determined as a function of the instantaneous movement state of the vehicle body.

20. Method according to Claim 18 or 19, **characterized in that** the setpoint rotational state is determined as a function of the instantaneous wheel contact forces.

21. Method according to at least one of Claims 18 to 20, **characterized in that** the setpoint rotational state is determined on the basis of a control algorithm which stabilizes the course of the vehicle.

22. Method according to at least one of Claims 18 to 21, **characterized in that** a setpoint/actual value comparison is carried out at the wheel-mounted control unit (31) and the wheel braking torque is reduced if the actual angular speed of the wheel is lower than the setpoint angular speed, and **in that** the wheel braking torque is increased if the actual angular speed is higher than the setpoint angular speed.

23. Method according to at least one of Claims 18 to 22, **characterized in that** at least the signals which are representative of the actual and/or setpoint rotational state are fed to the common control device (30) via a bus system.

24. Method according to at least one of Claims 18 to 23, **characterized in that** the respective setpoint and actual rotational states are processed within a housing section which is integrated into the wheel brake device and in which the control unit (31) is accommodated.

25. Method according to at least one of Claims 18 to 24, **characterized in that** a setpoint rotational state which is specific to each wheel is determined at the common control device on the basis of a control strategy for a traction control system, electronic differential lock or electronic stability programme and is passed on to the respective wheel-mounted control unit (31).

26. Method according to at least one of Claims 18 to 25, **characterized in that**, in particular in the case of a malfunction when the central control unit (30) predefines the setpoint values, an ABS control algorithm is processed at the respective control unit (31) (wheel electronics) which is provided in the wheel area.

27. Method according to at least one of Claims 18 to 26, **characterized in that**, in the case of a malfunction of the wheel-mounted control unit, ABS control of the braking torque is performed by the common control device (30).

28. Method according to at least one of Claims 18 to 27, **characterized in that** the driving speed of the vehicle is calculated from the four wheel-mounted sensor elements (14).

29. Method according to at least one of Claims 18 to 28, **characterized in that** if no signals representing the setpoint rotational state are present at the central control device (30), ABS control is performed by the respective wheel-mounted control unit (31).

## Revendications

1. Arrangement de frein de roue pour un véhicule comprenant :
- un arrangement de pince de frein (2) pour produire un moment de frein de roue,
- un organe de détection (14) pour détecter l'état de rotation momentané d'une roue de véhicule qui entre en interaction avec une section du disque de frein (1),
- un arrangement de contrôle pour contrôler l'arrangement de pince de frein (2) qui contrôle le moment de frein de roue à l'aide de l'état de rotation réel ou momentané détecté,
**caractérisé en ce que** l'arrangement de contrôle présente une unité de contrôle (31) côté roue intégrée dans l'arrangement de pince de frein (2), laquelle ordonne un réglage du moment de frein de roue correspondant en fonction de l'état de rotation réel détecté de la roue et d'un état de rotation de consigne prédéfini.

2. Arrangement de frein de roue selon la revendication 1, **caractérisé en ce que** l'arrangement de pince de frein (2) est actionné de manière électromécanique.

3. Arrangement de frein de roue selon la revendication 1 ou 2, **caractérisé en ce que** l'unité de contrôle (31) est connectée avec l'organe de détection (14) par le biais d'une ligne de liaison (15) intégrée dans l'arrangement de pince de frein (2).

4. Arrangement de frein de roue selon l'une des revendications 1 à 3, **caractérisé en ce que** l'organe de détection (14) présente un codeur à impulsions.

5. Arrangement de frein de roue selon l'une des revendications 1 à 4, **caractérisé en ce que** l'arrangement de contrôle présente un dispositif de contrôle central (30) pour prédéfinir un état de rotation de consigne, notamment une vitesse de rotation de consigne de roue ou une force de serrage de consigne de roue pour chaque roue.

6. Arrangement de frein de roue selon l'une des revendications 1 à 5, **caractérisé en ce que** l'état de rotation momentané de consigne est acheminé à l'unité de contrôle décentralisée (31) par le biais d'un système de bus.

7. Arrangement de frein de roue selon l'une des revendications 1 à 6, **caractérisé en ce que** le dispositif de contrôle centrale (30) détermine une valeur de consigne pour chaque unité de contrôle décentralisée (31) au moyen d'une trajectoire de consigne du véhicule et au moyen des moments de frein de roue momentanés.

8. Arrangement de frein de roue selon l'une des revendications 1 à 7, **caractérisé en ce que** l'interaction est de nature magnétique, électrique, optique ou acoustique.

9. Arrangement de frein de roue selon l'une des revendications 1 à 6, **caractérisé en ce que** l'organe de détection (14) détecte la modification de l'inductance d'un système entourant le disque de frein.

10. Arrangement de frein de roue selon l'une des revendications 1 à 9, **caractérisé en ce que** l'organe de détection (14) comprend une bobine (23).

11. Arrangement de frein de roue selon la revendication 10, **caractérisé en ce que** la bobine (23) est disposée autour d'un noyau de bobine et que le noyau de bobine est approché du disque de frein (1) de telle sorte que les lignes de champ (21) sortant du noyau de bobine pénètrent dans le disque de frein (1).

12. Arrangement de frein de roue selon l'une des revendications 1 à 11, **caractérisé en ce que** l'organe de détection (14) est monté sur un élément de garniture de frein (10) remplaçable de l'arrangement de pince de frein.

13. Arrangement de frein de roue selon l'une des revendications 1 à 12, **caractérisé en ce que** l'organe de détection (14) est disposé de telle sorte qu'il entre en interaction avec la zone périphérique extérieure du disque de frein (1).

14. Arrangement de frein de roue selon l'une des revendications 1 à 12, **caractérisé en ce que** le disque de frein (1) présente des canaux de ventilation intérieurs (3) qui sont séparés les uns des autres par des montants (4), l'organe de détection (14) étant disposé de telle sorte qu'il entre en interaction avec les montants (4).

15. Arrangement de frein de roue selon l'une des revendications 1 à 12, **caractérisé en ce que** le disque de frein (1) est muni dans la zone périphérique extérieure d'éléments en saillie ou de dents (17) et que l'organe de détection (14) entre en interaction avec les éléments en saillie ou les dents (17).

16. Arrangement de frein de roue selon l'une des revendications 1 à 12, **caractérisé en ce que** l'organe de détection (14) est disposé de telle sorte qu'il entre en interaction avec une zone de surface latérale du disque de frein (1).

17. Arrangement de frein de roue selon l'une des revendications 1 à 12, **caractérisé en ce que** le disque de frein (1) est muni de plusieurs orifices (24) se trouvant sur un cercle primitif de référence et que l'organe de détection (14) est disposé de telle sorte qu'il entre en interaction avec le disque de frein (1) dans la zone du cercle primitif de référence.

18. Procédé de contrôle du moment de frein de roue sur un véhicule automobile avec un arrangement de frein de roue selon l'une des revendications 1 à 17,
- comprenant un organe de détection (14) pour détecter l'état de rotation momentané d'une roue de véhicule,
- comprenant un dispositif de contrôle central (30) commun et
- comprenant à chaque fois une unité de contrôle décentralisée (31) côté roue pour chaque roue de véhicule,
avec lequel des signaux représentant l'état de rotation réel des roues d'au moins un essieu du véhicule sont générés dans le cadre d'une opération de freinage et le moment de frein de roue est contrôlé en fonction de ces signaux, **caractérisé par** les étapes :
- détermination d'un état de rotation réel pour chaque roue de l'au moins un essieu du véhicule à chaque fois par un organe de détection (14) qui entre en interaction avec une section du disque de frein (1),
- transmission des signaux représentant l'état de rotation réel pour chaque roue au dispositif de contrôle commun (30),
- détermination d'un état de rotation de consigne pour chaque roue de l'au moins un essieu du véhicule par le biais du dispositif de contrôle commun (30),
- transmission des signaux représentant l'état de rotation de consigne à une unité de contrôle décentralisée (31) qui se trouve à chaque fois côté roue, intégrée dans l'arrangement de pince de frein,
- traitement des signaux représentant l'état de rotation réel et des signaux représentant l'état de rotation de consigne par l'unité de contrôle décentralisée (31) et
- réglage du moment de frein de roue correspondant en fonction du traitement des signaux d'état de rotation réel et de consigne effectué par l'unité de contrôle décentralisée (31).

19. Procédé selon la revendication 18, **caractérisé en ce que** l'état de rotation de consigne est déterminé en fonction de l'état de déplacement momentané de la structure du véhicule.

20. Procédé selon la revendication 18 ou 19, **caractérisé en ce que** l'état de rotation de consigne est déterminé en fonction des forces de contact momentanées des roues.

21. Procédé selon au moins l'une des revendications 18 à 20, **caractérisé en ce que** l'état de rotation de consigne est déterminé sur la base d'un algorithme de contrôle stabilisant la course du véhicule.

22. Procédé selon au moins l'une des revendications 18 à 21, **caractérisé en ce qu'**une comparaison consigne/réel est effectuée du côté de l'unité de contrôle (31) côté roue et le moment de frein de roue est réduit lorsque la vitesse angulaire réelle de la roue est inférieure à la vitesse angulaire de consigne et que le moment de frein de roue est augmenté lorsque la vitesse angulaire réelle est supérieure à la vitesse angulaire de consigne.

23. Procédé selon au moins l'une des revendications 18 à 22, **caractérisé en ce qu'**au moins les signaux représentatifs de l'état de rotation réel et/ou de consigne sont acheminés au dispositif de contrôle commun (30) par le biais d'un système de bus.

24. Procédé selon au moins l'une des revendications 18 à 23, **caractérisé en ce que** le traitement de l'état de rotation de consigne et réel correspondant s'effectue dans une section de boîtier intégrée dans le dispositif de frein de roue dans laquelle est logée l'unité de contrôle (31).

25. Procédé selon au moins l'une des revendications 18 à 24, **caractérisé en ce qu'**un état de rotation de consigne individuel pour chaque roue est déterminé du côté du dispositif de contrôle commun sur la base d'une stratégie ASR, EDS ou ESP puis transmis à l'unité de contrôle (31) côté roue correspondante.

26. Procédé selon au moins l'une des revendications 18 à 25, **caractérisé en ce qu'**un algorithme de contrôle ABS est exécuté du côté de l'unité de contrôle (31) à chaque fois prévue dans la zone de la roue (électronique de roue), notamment en cas de défaut de fonctionnement lors de l'attribution des valeurs de consigne par le dispositif de contrôle central (30).

27. Procédé selon au moins l'une des revendications 18 à 26, **caractérisé en ce qu'**une régulation ABS du moment de freinage est effectué par le dispositif de contrôle commun (30) en cas de défaut de fonctionnement de l'unité de contrôle côté roue.

28. Procédé selon au moins l'une des revendications 18 à 27, **caractérisé en ce que** la vitesse de déplacement du véhicule est calculée à partir des quatre organes de détection (14) côté roue.

29. Procédé selon au moins l'une des revendications 18 à 28, **caractérisé en ce que** dans le cas où aucun signal représentant l'état de rotation de consigne n'est présent du côté du dispositif de contrôle central (30), une régulation ABS est effectuée par l'unité de contrôle (31) côté roue correspondante.
